(19) Europäisches Patentamt
European Patent Office
Office européen des brevets

(11) **EP 4 546 622 A1**

(12) **EUROPEAN PATENT APPLICATION**
published in accordance with Art. 153(4) EPC

(43) Date of publication:
**30.04.2025 Bulletin 2025/18**

(21) Application number: **23829934.1**

(22) Date of filing: **12.06.2023**

(51) International Patent Classification (IPC):
**H02K 11/40** (2016.01)    **H02K 7/08** (2006.01)
**H02K 7/10** (2006.01)    **H02K 5/16** (2006.01)
**H02K 5/08** (2006.01)

(86) International application number:
**PCT/CN2023/099748**

(87) International publication number:
**WO 2024/001751 (04.01.2024 Gazette 2024/01)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority:    **30.06.2022   CN 202210763512**
                  **28.04.2023   CN 202310483862**

(71) Applicant: **Suzhou Inovance Automotive Co., Ltd.**
**Suzhou, Jiangsu 215104 (CN)**

(72) Inventors:
• **ZHONG, Hui**
**Suzhou, Jiangsu 215104 (CN)**

• **WU, Ruiwen**
**Suzhou, Jiangsu 215104 (CN)**
• **WANG, Yuan**
**Suzhou, Jiangsu 215104 (CN)**
• **XU, Kepeng**
**Suzhou, Jiangsu 215104 (CN)**
• **JIN, Yijun**
**Suzhou, Jiangsu 215104 (CN)**

(74) Representative: **Osterhoff, Utz**
**Bockermann Ksoll**
**Griepenstroh Osterhoff**
**Patentanwälte**
**Bergstraße 159**
**44791 Bochum (DE)**

(54) **ELECTRIC DRIVING SYSTEM AND ELECTRIC VEHICLE**

(57)    The present application discloses an electric driving system and an electric vehicle, and relates to the technical field of new energy vehicle. The electric driving system includes a motor and an apparatus for suppressing electric corrosion of a bearing. The motor includes a motor housing, a bearing and a rotating shaft provided in the motor housing. The apparatus for suppressing electric corrosion of the bearing includes a capacitance module and a first resistance module connected in series. An input end of the apparatus for suppressing the electric corrosion of the bearing is electrically connected to the rotating shaft, and an output end of the apparatus for suppressing the electric corrosion of the bearing is grounded. The electric vehicle includes the electric driving system.

FIG. 2

EP 4 546 622 A1

**Description**

**CROSS-REFERENCE TO RELATED APPLICATIONS**

The present application claims priority to Chinese Patent Application No. 202210763512.8 filed on June 30, 2022 and Chinese Patent Application No. 202310483862.3 filed on April 28, 2023, the entire contents of which are incorporated by reference.

**TECHNICAL FIELD**

The present application relates to the technical field of new energy electric vehicles, and in particular to an electric driving system and an electric vehicle.

**BACKGROUND**

The electric driving system of the new energy vehicle includes at least a drive motor and a motor controller. During the operation of the electric driving system, the common mode voltages and the high frequency loop currents are generated. Due to the voltage division effect of the parasitic capacitance in the electric driving system, the common mode voltage will cause a voltage drop between the inner ring of the bearing and the outer ring of the bearing. When the common mode shaft voltage exceeds the critical voltage of the bearing oil film, the oil film is broken down, and the electrical discharge machining (EDM) discharge phenomenon occurs, causing the outer ring of the bearing and the ball surface of the bearing to be ablated and spots to appear. The long-term and frequent EDM discharge will cause obvious washboard patterns on the outer ring of the bearing and the ball surface of the bearing, that is, the electric corrosion of the bearing, which will cause the motor to vibrate and make noise, affecting the operation of the motor.

In the related art, in order to avoid the electric corrosion of the bearing, a conductive ring or a conductive carbon brush is provided on the drive motor to form a conductive bypass. However, the problem with the present solution is that the high frequency loop current of the bearing at the motor end and the bearing at the decelerator end is large, the high frequency loop voltage generated by the bearing at the decelerator end is high, and the electric corrosion phenomenon of the bearing still exists.

**SUMMARY**

The main purpose of the present application is to provide an electric driving system and an electric vehicle, aiming to solve the technical problem of the electric corrosion phenomenon of the bearing in the motor of the electric driving system in the related art.

To achieve the above objectives, the present application adopts the following technical solutions:

In a first aspect, the present application provides an electric driving system, including:

a motor including a motor housing, a bearing and a rotating shaft provided in the motor housing;

an apparatus for suppressing electric corrosion of the bearing including a capacitance module and a first resistance module connected in series; and

an input end of the apparatus for suppressing the electric corrosion of the bearing is electrically connected to the rotating shaft, and an output end of the apparatus for suppressing the electric corrosion of the bearing is grounded.

In an embodiment, in the electric driving system, the apparatus for suppressing the electric corrosion of the bearing further includes:

a reactance module, an input end of the reactance module is connected to the first resistance module, and an output end of the reactance module is grounded.

In an embodiment, in the electric driving system, the apparatus for suppressing the electric corrosion of the bearing further includes a second resistance module,

the second resistance module is connected in parallel with the capacitance module and the first resistance module connected in series; or

the second resistance module is connected in parallel with the capacitance module, the first resistance module and the reactance module connected in series.

In an embodiment, in the electric driving system, the capacitance module includes a plurality of capacitances electrically connected, and the first resistance module includes a plurality of resistances electrically connected; the reactance module includes a plurality of magnetic beads electrically connected and/or a plurality of inductances electrically connected, and the second resistance module includes a plurality of resistances electrically connected.

In an embodiment, in the electric driving system, the electric driving system further includes:

a motor controller electrically connected to the motor;

a decelerator; and

the apparatus for suppressing the electric corrosion of the bearing is provided at the motor, the motor controller or the decelerator.

In an embodiment, in the electric driving system, the electric driving system further includes:

an insulation member provided between the bearing and an end cover of the motor; and

the bearing is provided in the motor housing and sleeved at an outer side of the rotating shaft.

In an embodiment, in the electric driving system, the input end of the apparatus for suppressing the electric corrosion of the bearing is electrically connected to the rotating shaft through a conductive bypass member.

In an embodiment, in the electric driving system, the electric driving system further includes:

a decelerator electrically connected to the motor; and

the decelerator includes a decelerator shaft connected to the rotating shaft, and the input end of the apparatus for suppressing the electric corrosion of the bearing is electrically connected to the decelerator shaft through a conductive bypass member.

In an embodiment, in the electric driving system, the electric driving system further includes:

a motor controller electrically connected to the motor,

the output end of the apparatus for suppressing the electric corrosion of the bearing is electrically connected to the motor housing, and the motor housing is grounded; or

the output end of the apparatus for suppressing the electric corrosion of the bearing is electrically connected to the motor controller housing, and the motor controller housing is grounded.

In a second aspect, the present application provides an electric vehicle, including:

a battery; and

the electric driving system;

the battery is configured to supply electrical energy to the electric driving system.

One or more of the above technical solutions provided in the present application may have the following advantages or at least achieve the following technical effects:
The present application provides an electric driving system and an electric vehicle. The electric driving system includes a motor and an apparatus for suppressing the electric corrosion of the bearing. The rotating shaft of the motor is grounded through the apparatus for suppressing the electric corrosion of the bearing, and the apparatus for suppressing the electric corrosion of the bearing includes a capacitance module and a first resistance module connected in series, which can reduce the common mode voltage of the inner and outer rings of the bearing, avoid the EDM discharge caused by breaking down the oil film when the voltage of the inner and outer rings of the bearing is too high, and has the effect of suppressing the electric corrosion of the bearing. At the same time, the capacitance module and the first resistance module connected in series can suppress the high frequency loop current, avoid the influence of the shaft current on the bearing, and have the effect of extending the service life of the bearing.

## BRIEF DESCRIPTION OF THE DRAWINGS

In order to illustrate the technical solutions in the embodiments of the present application or in the related art more clearly, the following briefly introduces the accompanying drawings required for the description of the embodiments or the related art. Obviously, the drawings in the following description are only part of embodiments of the present application. For those skilled in the art, other drawings can also be obtained according to the structures shown in these drawings without any creative effort.

FIG. 1 is a common mode equivalent circuit of an electric driving system in the related art.

FIG. 2 is an equivalent circuit diagram of the electric driving system according to a first embodiment of the present application.

FIG. 3 is an equivalent circuit diagram of the electric driving system according to a second embodiment of the present application.

FIG. 4 is an equivalent circuit diagram of the electric driving system according to a third embodiment of the present application.

FIG. 5 is an equivalent circuit diagram of an apparatus for suppressing an electric corrosion of a bearing in the electric driving system according to the third embodiment of the present application.

FIG. 6 is an equivalent circuit diagram of the electric driving system according to a fourth embodiment of the present application.

FIG. 7 is an equivalent circuit diagram of the apparatus for suppressing the electric corrosion of the bearing in the electric driving system according to the fourth embodiment of the present application.

FIG. 8 is a schematic structural diagram of the apparatus for suppressing the electric corrosion of the bearing in the electric driving system according to a fifth embodiment of the present application.

FIG. 9 is a schematic structural diagram of the electric driving system according to the fifth embodiment of the present application.

FIG. 10 is a schematic position diagram of the apparatus for suppressing the electric corrosion of the bearing in the electric driving system according to a sixth embodiment of the present application.

FIG. 11 is another schematic position diagram of the apparatus for suppressing the electric corrosion of the bearing in the electric driving system according to a sixth embodiment of the present application.

FIG. 12 is a schematic position diagram of the apparatus for suppressing the electric corrosion of the bearing in the electric driving system according to a seventh embodiment of the present application.

FIG. 13 is another schematic position diagram of the apparatus for suppressing the electric corrosion of the bearing in the electric driving system according to the seventh embodiment of the present application.

Description of reference numbers in the accompanying drawing:

| reference number | name | reference number | name |
| --- | --- | --- | --- |
| 10 | electronics module | 20 | end cover |
| 30 | rotating shaft | 40 | bearing |
| 50 | insulation member | 60 | PCB |
| 61 | electrical connection fixation hole | 70 | conductive bypass member |
| 80 | position sensor | 90 | support member |

The realization of the objective, functional characteristics, and advantages of the present application are further described with reference to the accompanying drawings.

## DETAILED DESCRIPTION OF THE EMBODIMENTS

In order to make the purpose, technical scheme and advantages of the present application more clear, the technical scheme in the embodiment of the present application will be clearly and completely described in combination with the accompanying drawings in the embodiment of the present application. It is obvious that the embodiments to be described are only some rather than all of the embodiments of the present application. All other embodiments obtained by those skilled in the art based on the embodiments of the present application without creative efforts shall fall within the scope of the present application.

It should be noted that if there are directional indications, such as up, down, left, right, front, back, etc, involved in the embodiments of the present application, the directional indications are only used to explain a certain posture as shown in the accompanying drawings. If the specific posture changes, the directional indication also changes accordingly. In the present application, the term "includes", "comprises" or any other variation thereof is intended to cover non-exclusive inclusion, so that a process, method, article or system including a set of elements includes not only those elements but also other elements not expressly listed, or it may include elements inherent to the process, method, object, or system. In the absence of further restrictions, the element defined by the sentence "including..." does not preclude the existence of other identical elements in the process, method, article, or system. In the description of the present application, unless otherwise specified and limited, the terms "installation", "connecting" and "connection" should be understood in a broad sense, for example, it can be a fixed connection, a detachable connection, integrally connected, mechanically connected, electrically connected, directly connected or indirectly connected through an intermediary, and it can be the internal communication of two components. If there are descriptions related to "first", "second", etc. in the embodiments of the present application, the descriptions of "first", "second", etc. are only for the purpose of description, and should not be construed as indicating or implying relative importance or implicitly indicates the number of technical features indicated. Thus, a feature delimited with "first", "second" may expressly or implicitly include at least one of that feature. In the present application, suffixes such as "module", "part" or "unit" used to denote a component are only intended to facilitate the description of the present application and have no specific meaning themselves. Therefore, "module", "part" or "unit" can be used in a mix.

For those skilled in the art, the specific meaning of the above terms in the present application may be understood in accordance with specific conditions. In addition, the technical solutions between the various embodiments can be combined with each other, but must be based on the realization by those skilled in the art. When the combination of technical solutions is contradictory or cannot be realized, it should be considered that the combination of such technical solutions does not exist or fall within the scope of protection claimed in the present application.

The electric driving system of the new energy vehicle at least includes a drive motor and a motor controller. During the operation of the electric driving system, the pulse width modulation (PWM) signal wave output by the motor controller will generate a common mode voltage between the midpoint of the DC bus and the midpoint of the three-phase winding of the drive motor. At the same time, due to the fast switching characteristics of the switching devices in the motor controller, a high dv/dt value is generated. The dv/dt value and the coupling capacitance between the stator winding and the housing jointly cause a high frequency common mode current, which excites an annular common mode magnetic flux in the iron core and induces a shaft voltage in the rotating shaft, generating a high frequency loop current. Under the combined effects of the common mode voltage and the high frequency loop current, the bearing at the motor end, the bearing at the non-driving end of the decelerator, and the bearing at the driving end of the decelerator are all prone to damage.

Due to the voltage division effect of the parasitic capacitance in the electric driving system, the common mode voltage will cause a voltage drop between the inner ring of the bearing and the outer ring of the bearing. When the common mode shaft voltage exceeds the critical voltage of the bearing oil film, the oil film is broken down, and the electrical discharge machining (EDM) discharge phenomenon occurs, causing the inner ring, the outer ring and the ball surface of the bearing to be ablated and spots to appear. The long-term and frequent EDM discharge will cause obvious washboard patterns on the inner ring, the outer ring and the ball surface of the bearing, that is, the electric corrosion of the bearing, which will cause the motor to vibrate and make noise, affecting the operation of the motor.

In the related art, in order to avoid electric corrosion of the bearing, a conductive fiber or a conductive carbon rod is provided on the driving motor to form a conductive bypass. Generally, there are the following schemes:

1. An insulation bearing is provided at the motor end, and the driving end of the decelerator is single-ended conductive.

2. An insulation bearing is respectively provided at the non-driving end of the decelerator and the driving end of the decelerator, and the motor end is single-ended conductive.

3. An insulation bearing is respectively provided at the motor end and the non-driving end of the decelerator, and the motor end is single-ended conductive.

The above scheme is mainly aimed at suppressing the electric corrosion of the bearing of 400V high-voltage silicon (Si) products. With the development and application of silicon carbide (SiC) technology, the dv/dt value will become higher, and the high frequency loop current generated will also become larger. The problem with the above scheme is that the high frequency loop current of the bearing at the motor end and the bearing at the decelerator end is relatively large, the high frequency loop voltage generated by the bearing at the decelerator end is relatively high, and the electric corrosion phenomenon of the bearing still exists. Moreover, the sealing of the conductive ring that realizes single-end conduction is difficult to ensure, which will also affect the conductive effect. In addition, there is no effective solution in the related art for suppressing the electric corrosion of the bearing of 800V silicon carbide (SiC) products.

In view of the technical problem that the motor exists the electric corrosion phenomenon of the bearing in the related art, and the present technology cannot effectively suppress the electric corrosion of the bearing, the present application provides an electric driving system and an electric vehicle. The electric driving system provided by the present application is described in detail below with reference to the accompanying drawings through specific embodiments and implementation methods.

First embodiment

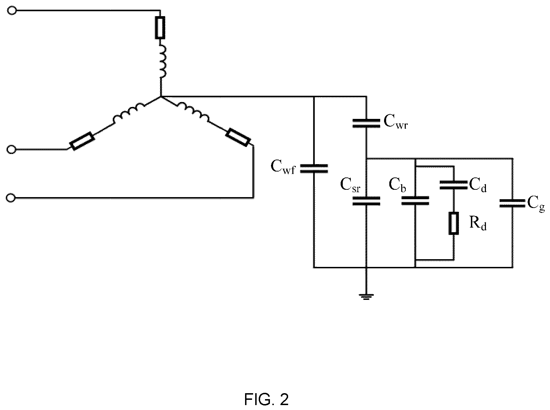

Referring to FIG. 2, the first embodiment of the electric driving system of the present application is provided, and the electric driving system may include a motor and an apparatus for suppressing the electric corrosion of the bearing.

The motor may include a motor housing, a bearing and a rotating shaft provided in the motor housing, an inner ring of the bearing is connected to the rotating shaft, and an outer ring of the bearing is connected to the motor housing. The motor may also include a rotor and a stator, and the stator is provided with components such as a stator core and a stator winding. In addition, the motor may also include components such as a spline and a position sensor. The motor structure is a technical solution known in the related art and will not be described in detail here.

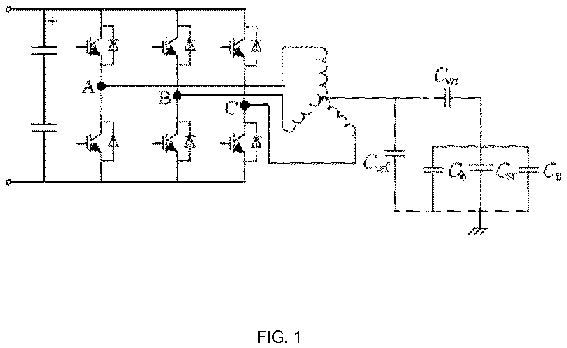

As shown in FIG. 1, a common mode equivalent circuit of an electric driving system in the related art is shown. Specifically, a parasitic capacitance $C_b$ is provided at the bearing of the motor, a coupling capacitance $C_{sr}$ is provided between the stator core and the rotor, a coupling capacitance $C_{wr}$ is provided between the stator winding and the rotor, a coupling capacitance $C_{wf}$ is provided between the stator winding and the stator, and a parasitic capacitance $C_g$ is provided between the bearing at the decelerator side and the spline.

At the fast switching moment of the switching device in the motor controller, the high dv/dt value and the coupling capacitance jointly cause a high frequency common mode current, which excites an annular common mode magnetic flux in the iron core and induces a common mode shaft voltage at the rotating shaft to generate a high frequency loop current.

Aiming at the problem of the electric corrosion of the bearing of the motor, according to the principle of generating the common mode shaft voltage and the high frequency loop current, this embodiment provides an electric driving system including an apparatus for suppressing the electric corrosion of the bearing. The input end of the apparatus for suppressing the electric corrosion of the bearing is electrically connected to the rotating shaft of the motor in the electric driving system, and the output end of the apparatus for suppressing the electric corrosion of the bearing is grounded. The apparatus for suppressing the electric corrosion of the bearing can be connected in parallel with the bearing in the motor, specifically in parallel with the parasitic capacitance $C_b$ of the bearing.

The apparatus for suppressing the electric corrosion of the bearing is configured to suppress the high frequency loop current generated on the bearing, and the apparatus for suppressing the electric corrosion of the bearing can include: a capacitance module and a first resistance module connected in series.

In the electric driving system of this embodiment, the input end of the apparatus for suppressing the electric corrosion of the bearing is electrically connected to the rotating shaft of the motor, and the output end is grounded, that is, the rotating shaft of the motor is grounded through the apparatus for suppressing the electric corrosion of the bearing. Specifically, the input end of the capacitance module is electrically connected to the rotating shaft of the motor, the output end of the capacitance module is connected to the input end of the first resistance module, and the output end of the first resistance module is grounded as the output end of the apparatus for suppressing the electric corrosion of the bearing.

After the apparatus for suppressing the electric corrosion of the bearing is applied to the electric driving system provided in this embodiment, the equivalent circuit diagram of the electric driving system is shown in FIG. 2, and the capacitance module and the first resistance module connected in series constitute the apparatus for suppressing the electric corrosion of the bearing. It should be noted that the capacitance module can be implemented by one capacitance, or multiple capacitances connected in series and/or in parallel. The first resistance module can be implemented by one resistance, or plurality of resistances connected in series and/or in parallel. For example, in this embodiment, the capacitance module is implemented by one capacitance $C_d$, and the first resistance module is implemented by one resistance $R_d$. The apparatus for suppressing the electric corrosion of the bearing is formed by the capacitance $C_d$ and the resistance $R_d$ connected in series. In specific applications, it can be selected according to actual needs and is not limited here.

As shown in FIG. 2, the capacitance $C_d$ and the resistance $R_d$ connected in series are connected in parallel with the parasitic capacitance $C_b$ of the bearing, and the voltage division is performed on the voltage of the inner and outer rings of the bearing, so as to reduce the common mode voltage of the inner and outer rings of the bearing, and avoid the electric corrosion to the bearing caused by the EDM discharge when the voltage of the inner and outer rings of the bearing is so high to break down the oil film.

According to the following formula, the first formula:

$$V_b = K_f B_r V_{com}$$

$V_b$ represents the common mode voltage of the inner and outer rings of the bearing, $B_r$ represents the voltage division ratio, and $V_{com}$ represents the common mode shaft voltage at the rotating shaft;

the second formula:

$$B_r = \frac{\frac{1}{jw(C_{sr} + C_b)}}{\frac{1}{jw(C_{sr} + C_b)} + \frac{1}{jwC_{wr}}}$$

Combined with FIG. 1 and FIG. 2, since the capacitance $C_d$ and the resistance $R_4$ connected in series are connected in parallel with the parasitic capacitance $C_b$ of the bearing, $\frac{1}{jw(C_{sr}+C_b)}$ in the numerator and denominator of the second formula can be changed to $\frac{1}{jw(C_{sr}+C_b+C_d)}$. At this time, the voltage division ratio $B_r$ decreases with the increase of the capacitance $C_d$, and the common mode voltage $V_b$ of the inner and outer rings of the bearing also decreases.

In this embodiment, the capacitance $C_d$ of the apparatus for suppressing the electric corrosion of the bearing is connected in parallel with the bearing of the motor, and the voltage between the inner ring of the bearing and the outer ring of the bearing can be divided, and the voltage division ratio can be adjusted to reduce the common mode voltage $V_b$ of the inner and outer rings of the bearing, so as to avoid the electric corrosion to the bearing caused by the EDM discharge when the voltage of the inner and outer rings of the bearing is so high to break down the oil film. The resistance $R_d$ is connected in series with the capacitance $C_d$, which can reduce the loop current and avoid the influence of the differential mode voltage to the bearing. In the electric driving system, the capacitance module and the first resistance module in the apparatus for suppressing the electric corrosion of the bearing are connected in series, which can also avoid electromagnetic interference caused by the electromagnetic interference (EMI) exceeding due to instantaneous high frequency waves during charging and discharging.

In the electric driving system provided in this embodiment, the rotating shaft of the motor is grounded through the apparatus for suppressing the electric corrosion of the bearing. The apparatus for suppressing the electric corrosion of the bearing composed of the capacitance module and the first resistance module connected in series can reduce the common mode voltage of the inner and outer rings of the bearing, avoid the electric corrosion to the bearing caused by the EDM discharge when the voltage of the inner and outer rings of the bearing is so high to break down the oil film. At the same time, the capacitance module is connected in series with the first resistance module, which can suppress high frequency loop current, avoid the influence of the shaft current to the bearing, and extend the service life of the bearing.

Second embodiment

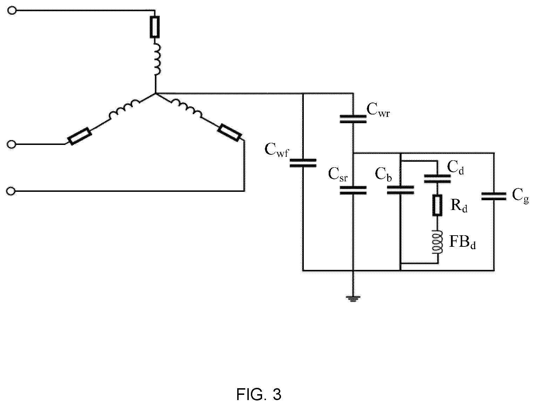

Based on the same inventive concept, with reference to FIG. 3, on the basis of the first embodiment, the second embodiment of the electric driving system of the present application is provided.

Further, in the electric driving system, the apparatus for suppressing the electric corrosion of the bearing may also include:

a reactance module, the input end of the reactance module is connected to the first resistance module, and the output end of the reactance module is grounded.

That is, in this embodiment, the apparatus for suppressing the electric corrosion of the bearing is a capacitance module, a first resistance module and a reactance module connected in series.

In a specific implementation, the input end of the apparatus for suppressing the electric corrosion of the bearing is electrically connected to the rotating shaft of the motor, and the output end is grounded, that is, the input end of the capacitance module is electrically connected to the rotating shaft of the motor, the output end of the capacitance module is connected to the input end of the reactance module through the first resistance module, and the output end of the reactance module is grounded as the output end of the apparatus for suppressing the electric corrosion of the bearing.

After the apparatus for suppressing the electric corrosion of the bearing is applied to the electric driving system provided in this embodiment, the equivalent circuit diagram of the electric driving system is shown in FIG. 3, and the capacitance module, the first resistance module and the reactance module connected in series constitute the apparatus for suppressing the electric corrosion of the bearing. It should be noted that the reactance module may include an inductance and/or a magnetic bead. The reactance module may be implemented by one inductance, or plurality of inductances connected in series and/or in parallel, or one magnetic bead, or plurality of magnetic beads connected in series and/or in parallel. In addition, the reactance module may also be implemented by one or more inductances and one or more magnetic beads, and the inductance and the magnetic bead may be connected in series and/or in parallel. For example, in this embodiment, the reactance module is implemented by one magnetic bead $FB_d$, and the apparatus for suppressing the electric corrosion of the bearing is formed by the capacitance $C_d$, the resistance $R_d$ and the magnetic bead $FB_d$ connected in series. In specific applications, it can be selected according to actual needs and is not limited here.

As shown in FIG. 3, the capacitance $C_d$, the resistance $R_d$ and the magnetic bead $FB_d$ connected in series are connected in parallel with the parasitic capacitance $C_b$ of the bearing, and the voltage division is performed on the voltage of the inner and outer rings of the bearing, which can avoid the electric corrosion to the bearing caused by the EDM discharge when the voltage of the inner and outer rings of the bearing is so high to break down the oil film. The magnetic bead $FB_d$ is connected in series with the resistance $R_d$ and the capacitance $C_d$, and the characteristics of low resistance at low frequency and high resistance at high frequency of the magnetic bead can effectively reduce the high frequency loop current, while not affecting the increase of the common mode voltage $V_b$ of the inner and outer rings of the bearing at low frequency, thereby avoiding the influence of the high frequency differential mode voltage to the bearing.

Compared with the electric driving system provided in the first embodiment, the electric driving system provided in this embodiment not only has the beneficial effects of the electric driving system provided in the first embodiment, but also effectively reduces the high frequency loop current through the high resistance at high frequency of the reactance module, so that the electric driving system can cope with the influence of the larger high frequency loop current generated under the high dv/dt value characteristics of the silicon carbide switching device.

Third embodiment

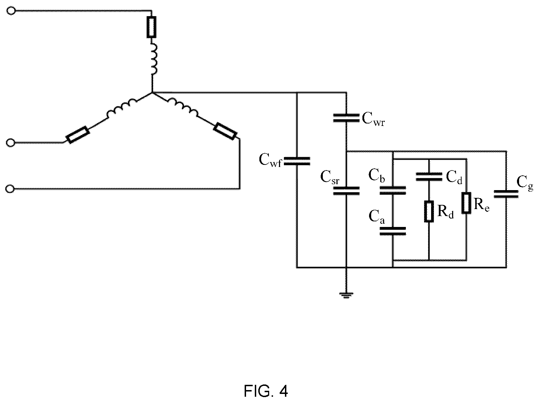

Based on the same inventive concept, referring to FIG. 4, on the basis of the first embodiment, the third embodiment of the electric driving system of the present application is provided.

In order to further release the charge of the rotating shaft of the motor to the ground, in the electric driving system, the apparatus for suppressing the electric corrosion of the bearing may also include:

a second resistance module connected in series with the capacitance module and connected in parallel with the first resistance module.

That is, in this embodiment, the apparatus for suppressing the electric corrosion of the bearing has two paths, one of which is the capacitance module and the first resistance module connected in series, and the other of which is a single second resistance module.

In a specific implementation, the input end of the apparatus for suppressing the electric corrosion of the bearing is electrically connected to the rotating shaft of the motor, and the output end of the apparatus for suppressing the electric corrosion of the bearing is grounded, that is, both the input end of the capacitance module and the input end of the second resistance module are electrically connected to the rotating shaft of the motor, the output end of the capacitance module is connected to the input end of the first resistance module, and the output end of the first resistance module and the output end of the second resistance module are connected in parallel as the output end of the apparatus for suppressing the electric corrosion of the bearing to be grounded.

After the apparatus for suppressing the electric corrosion of the bearing is applied to the electric driving system provided in this embodiment, the equivalent circuit diagram of the electric driving system is shown in FIG. 4. After the second resistance module connected in series with the capacitance module is connected in parallel with the first resistance module, the apparatus for suppressing the electric corrosion of the bearing is formed.

In this embodiment, the second resistance module connected in series with the capacitance module is connected in parallel with the first resistance module, so that the charge of the rotating shaft of the motor to the ground can be further released, so as to assist in reducing the shaft voltage.

Specifically, the capacitance module can be implemented by one capacitance, or multiple capacitances connected in series and/or in parallel. The first resistance module can be implemented by one resistance, or plurality of resistances connected in series and/or in parallel. The second resistance module can also be implemented by one resistance, or plurality of resistances connected in series and/or in parallel. In specific applications, the number of each electronics can be adjusted according to actual needs and is not limited here.

For example, in this embodiment, the capacitance module is the capacitance $C_d$, the first resistance module is the resistance $R_d$, and the second resistance module is a resistance $R_e$. As shown in FIG. 4, the resistance $R_e$ is connected in series with the capacitance $C_d$ and is connected in parallel with the resistance $R_d$, and the apparatus for suppressing the electric corrosion of the bearing of the electric driving system in this embodiment is formed.

In an embodiment, the capacitance module may include a plurality of electrically connected capacitances, the first resistance module may include a plurality of electrically connected resistances, and the second resistance module may include a plurality of electrically connected resistances.

The above-mentioned electrically connected may include series connection and/or parallel connection, specifically including but not limited to a plurality of electronics in series connection, a plurality of electronics in parallel connection, a plurality of electronics groups in series connection, or a plurality of electronics groups in parallel connection. The electronics group is a plurality of electronics in series connection or a plurality of electronics in parallel connection, which can be provided according to actual conditions and is not limited here.

In this way, the capacitance value of the capacitance module or the resistance value of the first resistance module and the resistance value of the second resistance module can be freely adjusted to meet the requirements of products of different models and improve wide adaptability. At the same time, the electrical connection mode can be selected according to actual needs, the number of electronics can be provided according to actual needs, and the device parameters can be adjusted according to actual needs, so that the apparatus for suppressing the electric corrosion of the bearing can achieve the best suppression effect.

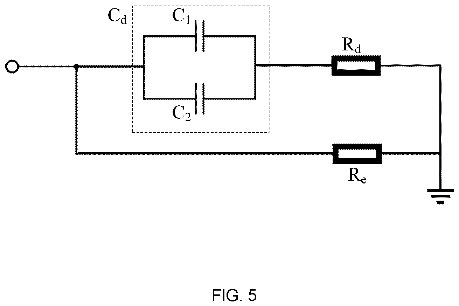

In an embodiment, as shown in FIG. 5, an equivalent circuit diagram of the apparatus for suppressing the electric corrosion of the bearing in this embodiment is shown, the resistance $R_e$ is the second resistance module in the apparatus for suppressing the electric corrosion of the bearing, the resistance $R_d$ is the first resistance module, and the capacitance module $C_d$ can be composed of a capacitance C1 and a capacitance C2 connected in parallel. One side of the circuit composed of the resistance $R_e$, the resistance $R_d$, the capacitance C1, and the capacitance C2 can be connected to the rotating shaft, and another side of the circuit can be connected to the motor housing, so as to achieve grounding.

In this embodiment, the circuit composed of the resistance $R_d$, the capacitance C1, and the capacitance C2 can be configured to suppress the common mode voltage acting on the outer ring of the bearing and reduce the amplitude fluctuation of the differential mode voltage. The phase and amplitude of the differential mode voltage can be adjusted by the capacitance C1 and the capacitance C2 connected in parallel with the capacitance C1, so as to assist in reducing the shaft voltage. The other circuit composed of the resistance $R_e$ can realize the charge release of the rotating shaft of the motor to the ground.

Compared with the electric driving system provided in the first embodiment, the electric driving system provided in the present embodiment not only has the beneficial effects of the electric driving system provided in the first embodiment, but also can release common mode charge and reduce electromagnetic interference caused by high frequency waves during charging and discharging. At the same time, the capacitance module is formed by the plurality of capacitances connected in series or parallel, the first resistance module and a second resistance module are formed by the plurality of resistances connected in series or parallel, so that the capacitance value of the capacitance module and the resistance value of the first resistance module and the resistance value of the second resistance module can be freely adjusted. The system has higher applicability, so that the apparatus for suppressing the electric corrosion of the bearing can achieve the best suppression effect.

Fourth embodiment

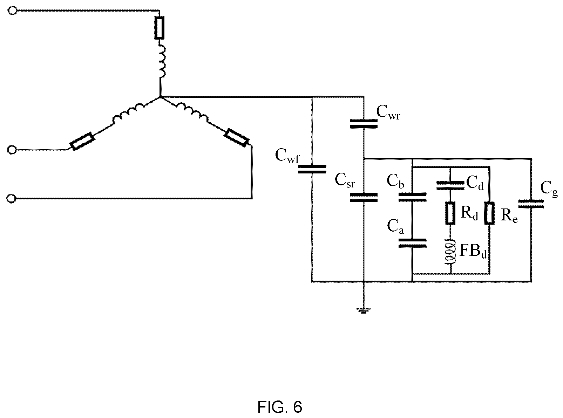

Based on the same inventive concept, referring to FIG. 6, on the basis of the second embodiment, the fourth embodiment of the electric driving system of the present application is provided.

In order to further release the charge of the rotating shaft of the motor to the ground, the apparatus for suppressing the electric corrosion of the bearing in the electric driving system can also include:

a second resistance module connected in parallel with the capacitance module, the first resistance module and the reactance module connected in series.

That is, the apparatus for suppressing the electric corrosion of the bearing in this embodiment has two paths, one of which is a capacitance module, a first resistance module and a reactance module connected in series, and the other of which is a single second resistance module.

In a specific implementation, the input end of the apparatus for suppressing the electric corrosion of the bearing is electrically connected to the rotating shaft of the motor, and the output end is grounded, that is, both the input end of the capacitance module and the input end of the second resistance module are electrically connected to the rotating shaft of the motor, the output end of the capacitance module is connected to the input end of the reactance module through the first resistance module, and the output end of the reactance module and the output end of the second resistance module are connected in parallel as the output end of the apparatus for suppressing the electric corrosion of the bearing to be grounded.

After the apparatus for suppressing the electric corrosion of the bearing is applied to the electric driving system provided in this embodiment, the equivalent circuit diagram of the electric driving system is shown in FIG. 6. The second resistance module is connected in parallel with the capacitance module, the first resistance module and the reactance module connected in series to form the apparatus for suppressing the electric corrosion of the bearing.

In this embodiment, the second resistance module is connected in parallel with the capacitance module, the first resistance module and the reactance module connected in series, so as to further release the charge of the rotating shaft of the motor to the ground and assist in reducing the shaft voltage.

Specifically, the capacitance module can be implemented by one capacitance, or a plurality of capacitances connected in series and/or in parallel, the first resistance module can be implemented by one resistance, or a plurality of resistances connected in series and/or in parallel, the second resistance module can also be implemented by one resistance, or a plurality of resistances connected in series or in parallel, the reactance module can be implemented by one inductance, or a plurality of inductances connected in series and/or in parallel, and the reactance module can also be implemented by one magnetic bead, or a plurality of magnetic beads connected in series and/or in parallel. In addition, the reactance module can also be implemented by one or more inductances, and one or more magnetic beads connected in series and/or in parallel. In specific applications, the number of each electronics can be adjusted according to actual needs and is not limited here.

For example, in this embodiment, the capacitance module is the capacitance $C_d$, the first resistance module is the resistance $R_d$, the reactance module is the magnetic bead $FB_d$, and the second resistance module is the resistance $R_e$. As shown in FIG. 6, the resistance $R_e$ is connected in parallel with the capacitance $C_d$, the resistance $R_4$ and the magnetic bead $FB_d$ connected in series to form the apparatus for suppressing the electric corrosion of the bearing of the electric driving system in this embodiment.

In an embodiment, the capacitance module may include a plurality of electrically connected capacitances, the first resistance module may include a plurality of electrically connected resistances, the reactance module may include a plurality of electrically connected magnetic beads and/or a plurality of electrically connected inductances, and the second resistance module may include a plurality of electrically connected resistances.

The above "electrically connected" may include a series connection and/or a parallel connection, specifically including but not limited to a plurality of electronics connected in series, a plurality of electronics connected in parallel, a plurality of electronics groups connected in series, or a plurality of electronics groups connected in parallel. The electronics group is a plurality of electronics connected in series or a plurality of electronics connected in parallel, and the specific connection mode may be provided according to the actual situation and is not limited here.

In this way, the capacitance value of the capacitance module, the characteristics of the reactance module, or the resistance value of the first resistance module and the second resistance module can be freely adjusted to meet the needs of different models of products, thereby improving wide adaptability. At the same time, the electrical connection mode can be selected according to actual needs, the number of electronics can be provided according to actual needs, and the device parameters can be adjusted according to actual needs, so that the apparatus for suppressing the electric corrosion of the bearing can achieve the best suppression effect.

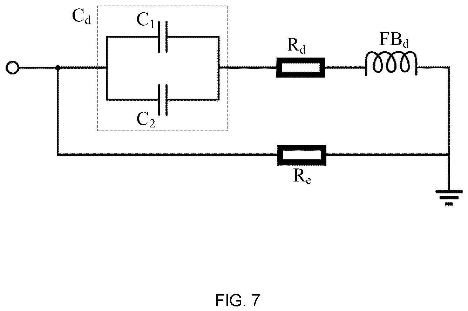

In an embodiment, as shown in FIG. 7, an equivalent circuit diagram of the apparatus for suppressing the electric corrosion of the bearing in this embodiment is shown, the resistance $R_e$ is the second resistance module in the apparatus for suppressing the electric corrosion of the bearing, the resistance $R_d$ is the first resistance module, the magnetic bead $FB_d$ is the reactance module in the apparatus for suppressing the electric corrosion of the bearing, and the capacitance module $C_d$ can be composed of the capacitance C1 and the capacitance C2 connected in parallel. One side of the circuit composed of the resistance $R_e$, the resistance $R_d$, the magnetic bead $FB_d$, the capacitance C1 and the capacitance C2 can be connected to the rotating shaft, and the other side of the circuit can be connected to the motor housing, so as to achieve grounding.

In this embodiment, the circuit composed of the resistance $R_d$, the magnetic bead $FB_d$, the capacitance C1 and the capacitance C2 can be used to suppress the common mode voltage acting on the outer ring of the bearing and reduce the amplitude fluctuation of the differential mode voltage. The phase and amplitude of the differential mode voltage can be adjusted through the capacitance C1 and the capacitance C2 connected in parallel, so as to assist in reducing the shaft voltage. The other circuit composed of the resistance $R_e$ can realize the charge release of the rotating shaft of the motor to the ground.

Compared with the electric driving system provided in the second embodiment, the electric driving system provided in this embodiment not only has all the beneficial effects of the electric driving system provided in the second embodiment, but also can release common mode charge and reduce electromagnetic interference caused by high frequency waves during charging and discharging. At the same time, the plurality of capacitances are connected in series or parallel to form the capacitance module, the plurality of inductances and/or magnetic beads are connected in series or parallel to form the reactance module, and the plurality of resistances are connected in series or parallel to form the first resistance module and the second resistance module, so that the capacitance value of the capacitance module, the characteristics of the reactance module, the resistance value of the first resistance module, and the resistance value of the second resistance module can be freely adjusted. The system has higher applicability, so that the apparatus for suppressing the electric corrosion of the bearing can achieve the best suppression effect.

Fifth embodiment

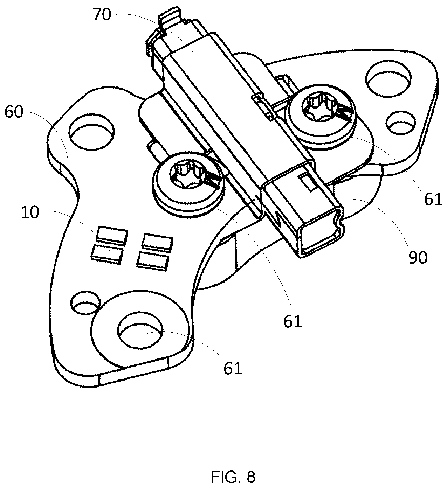

Based on the same inventive concept, referring to FIG. 8, on the basis of any one of the first to fourth embodiments, a fifth embodiment of the electric driving system of the present application is provided.

Further, as shown in FIG. 8, which is a schematic structural diagram of the apparatus for suppressing the electric corrosion of the bearing, the apparatus for suppressing the electric corrosion of the bearing of the electric driving system may also include:
a printed circuit board (PCB) 60. The capacitance module, the first resistance module, the reactance module and the second resistance module may be provided on the PCB 60.

Specifically, the capacitance module, the first resistance module, the reactance module and the second resistance module may constitute different circuit structures adopted in any one of the first to fourth embodiments, and are correspondingly provided in the electronics module 10. When the apparatus for suppressing the electric corrosion of the bearing includes the capacitance module and the first resistance module, the electronics module 10, that is, the capacitance module and the first resistance module, are provided on the PCB 60; when the apparatus for suppressing the electric corrosion of the bearing includes the capacitance module, the first resistance module and the reactance module, the electronics module 10, that is, the capacitance module, the first resistance module and the reactance module, are provided on the PCB 60; when the apparatus for suppressing the electric corrosion of the bearing includes the capacitance module, the first resistance module and the second resistance module, the electronics module 10, that is, the capacitance module, the first resistance module and the second resistance module are all provided on the PCB 60, or the capacitance module and the first resistance module are provided on the PCB 60, and the second resistance module is provided at other positions outside the PCB 60; when the apparatus for suppressing the electric corrosion of the bearing includes the capacitance module, the first resistance module, the reactance module and the second resistance module, the electronics module 10, that is, the capacitance module, the first resistance module, the reactance module and the second resistance module are all provided on the PCB 60, or the capacitance module, the first resistance module module and the reactance module are provided on the PCB 60, and the second resistance module is provided at other positions outside the PCB 60, and can be provided according to actual needs in specific applications.

Further, as shown in FIG. 8, the apparatus for suppressing the electric corrosion of the bearing of the electric driving system can also include:
a support member 90 provided below the PCB 60. An electrical connection fixation hole 61 is provided on the PCB 60.

Specifically, support member 90 can be a plastic material component, which plays an insulation role. The conductive bypass member 70 can pass through the electrical connection fixation hole 61 on the PCB 60 through a screw, so as to be fixed on the support member 90, so that the electrical connection between the conductive bypass member 70 and the device in electronics module 10 in apparatus for suppressing the electric corrosion of the bearing is realized. The PCB 60 can also be grounded, for example, the conductive bypass member 70 can be connected to the rotary transformer cover plate, housing, etc. of the motor by passing through other electrical connection fixation holes 61 on the PCB 60 with a screw. After the input end of the apparatus for suppressing the electric corrosion of the bearing is electrically connected to the rotating shaft 30 of the motor in the electric driving system, the rotor current can be led to the PCB 60 through the conductive bypass member 70, and the current is configured to flow to the ground end or the housing after passing through the electronics module 10 in the apparatus for suppressing the electric corrosion of the bearing.

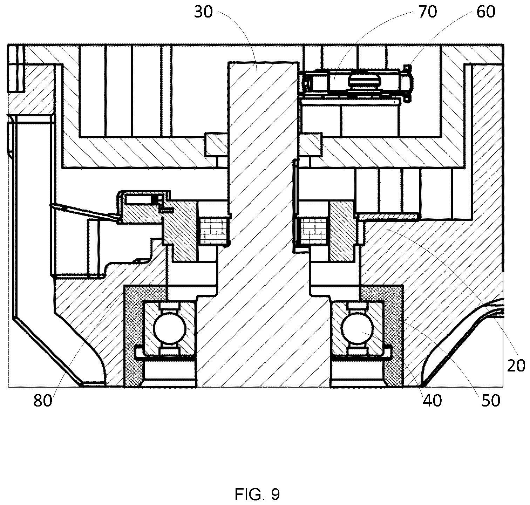

Further, as shown in FIG. 9, which is a schematic structural diagram of the electric driving system in this embodiment, the electric driving system can also include:
a motor controller and a decelerator electrically connected to the motor.

The apparatus for suppressing the electric corrosion of the bearing can be provided at the motor, the motor controller or the decelerator.

Specifically, the apparatus for suppressing the electric corrosion of the bearing can be installed at the non-driving end of the motor, or in the motor controller or the decelerator, and can also be integrated with the wire of the position sensor 80 to lead the current to the motor controller housing. In this embodiment, the installation position of the apparatus for suppressing the electric corrosion of the bearing is not limited.

Further, the decelerator can include a decelerator shaft connected to the rotating shaft 30.

In a specific implementation process, the apparatus for suppressing the electric corrosion of the bearing can be electrically connected to the rotating shaft 30 through the conductive bypass member 70, or can be electrically connected to the decelerator shaft through the conductive bypass member 70. Since the decelerator shaft is connected to the rotating shaft 30, the apparatus for suppressing the electric corrosion of the bearing is electrically connected to the rotating shaft 30 through the decelerator shaft. In an embodiment, the conductive bypass member 70 can be any one of a conductive fiber, a conductive carbon rod, a conductive elastic sheet, a conductive brush, etc.

In this embodiment, the input end of the apparatus for suppressing the electric corrosion of the bearing can be electrically connected to the rotating shaft 30 through the conductive bypass member 70 or electrically connected to the decelerator shaft through the conductive bypass member 70. The output end of the apparatus for suppressing the electric corrosion of the bearing can be grounded directly, or grounded through the motor housing of the motor, or grounded through the decelerator housing of the decelerator, or grounded through the motor controller housing of the motor controller. The output end of the apparatus for suppressing the electric corrosion of the bearing is grounded through the motor housing, specifically, it is directly electrically connected to the motor housing in the electric driving system, and the motor housing is grounded; the output end of the apparatus for suppressing the electric corrosion of the bearing is grounded through the decelerator housing, specifically, it is directly electrically connected to the decelerator housing in the electric driving system, and the decelerator housing is grounded; and the output end of the apparatus for suppressing the electric corrosion of the bearing is grounded through the motor controller housing, specifically, it is directly electrically connected to the motor controller housing in the electric driving system, and the motor controller housing is grounded.

Further, in order to cut off the current path of the high frequency loop current in the electric driving system, the non-driving end can be insulated, so as to prevent the bearing of the driving motor and the bearing of the decelerator in the electric driving system from being affected by the shaft current, thereby extending the service life of the bearing.

In an embodiment, as shown in FIG. 9, the electric driving system may further include:
an insulation member 50. The bearing 40 is provided in the motor housing and is sleeved on the outer side of rotating shaft 30, and the insulation member 50 is provided between the bearing 40 and the end cover 20 of the motor.

Specifically, the material of insulation member 50 may be high-strength plastic. The shape of the insulation member 50 may be an insulation ring. The insulation ring is installed on the outside of the bearing 40 of the motor, the inner wall of the insulation ring may contact with the outer ring of the bearing 40, and the outer wall of the insulation ring may contact with the inner wall of the end cover 20. The insulation ring is installed between the bearing 40 and the end cover 20, so that the bearing 40 is isolated from the housing.

As shown in FIG. 8 and FIG. 9, the apparatus for suppressing the electric corrosion of the bearing is electrically connected to the rotating shaft 30 of the motor through the conductive bypass member 70, and the insulation member 50 is provided between the bearing 40 and the end cover 20 of the motor. The inner wall of the insulation member 50 is abutted against the outer wall of the bearing 40, and the outer wall of the insulation member 50 is abutted against the inner wall of the motor end cover 20. The motor end cover 20 is a part of the motor housing. The insulation member 50 can be configured to isolate the bearing 40 and the motor housing. At this time, the equivalent circuit of the electric driving system is shown in FIG. 4 or FIG. 6. After the insulation member 50 is provided, the parasitic capacitance $C_a$ of the insulation member 50 will also join the voltage division of the bearing 40, further improving the suppression effect on the shaft current.

In another embodiment, the bearing 40 of the motor in the electric driving system can be an insulation bearing, and the end cover 20 can be an insulation end cover. The surface of the bearing 40 may be coated with an insulation coating, so that the outer ring of the bearing 40 is insulated, or the bearing 40 may be made of insulation material. Similarly, the insulation end cover may be directly made by coating an insulation coating or using insulation material. It should be noted that the electric driving system may use both the insulation bearing and the insulation end cover, or may use the insulation bearing or the insulation end cover alone. In addition, on the basis of using the insulation bearing or the insulation end cover, an insulation member 50 may be added between the bearing 40 and the end cover 20. The end cover 20 of the motor is a part of the motor housing.

Adding the apparatus for suppressing the electric corrosion of the bearing and the insulation treatment to the electric driving system can also suppress high frequency shaft voltage, and prevent the high frequency shaft voltage from being transmitted to the half shaft through the shaft system of the decelerator, thereby avoiding the electro magnetic compatibility (EMC) problem caused by the antenna effect of the half shaft.

The electric driving system provided in this embodiment further defines the hardware structure of the apparatus for suppressing the electric corrosion of the bearing based on the apparatus for suppressing the electric corrosion of the bearing in any one of the first to fourth embodiments, which not only has all the beneficial effects of the above embodiments, but also further ensures the stable installation of the apparatus for suppressing the electric corrosion of the bearing in the electric driving system through the PCB and the support member, meeting the needs of more application scenarios. In addition, by adding the insulation treatment, the high frequency shaft voltage can be further suppressed and the electromagnetic interference caused by high frequency waves can be reduced.

Sixth embodiment

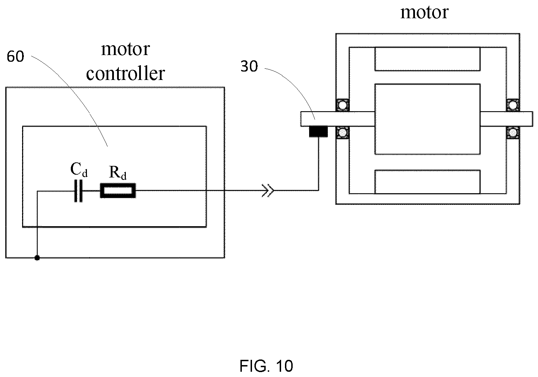

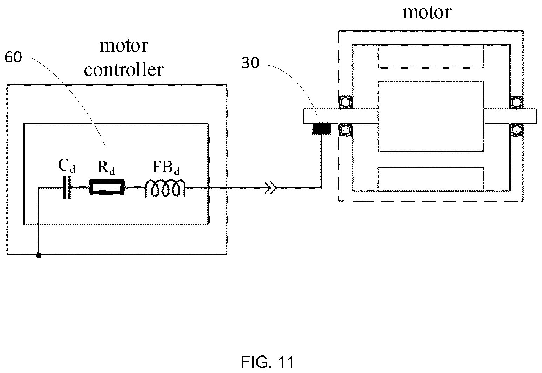

Based on the same inventive concept, with reference to FIG. 10 and FIG. 11, on the basis of the fifth embodiment, a sixth embodiment of the electric driving system of the present application is provided. The electric driving system includes a motor controller electrically connected to a motor, and the apparatus for suppressing the electric corrosion of the bearing is installed in the motor controller.

Further, in the electric driving system, the input end of the apparatus for suppressing the electric corrosion of the bearing can be directly electrically connected to the rotating shaft 30 through a conductive bypass member 70. The conductive bypass member 70 can be any one of a conductive fiber, a conductive carbon rod, a conductive elastic sheet, a conductive brush, etc.

Furthermore, the output end of the apparatus for suppressing the electric corrosion of the bearing is electrically connected to the motor housing in the electric driving system, and the motor housing is grounded; or
the output end of the apparatus for suppressing the electric corrosion of the bearing is electrically connected to the motor controller housing in the electric driving system, and the motor controller housing is grounded.

In an embodiment, FIG. 10 is a schematic position diagram of the apparatus for suppressing the electric corrosion of the bearing in the electric driving system of this embodiment. The apparatus for suppressing the electric corrosion of the bearing is installed in the motor controller, and the capacitance module and the first resistance module in the first embodiment, that is, the capacitance $C_d$ and the resistance $R_d$ connected in series, and the PCB 60 is provided in the motor controller. As shown in FIG. 10, the input end of the apparatus for suppressing the electric corrosion of the bearing is connected to the rotating shaft 30 of the motor, and the output end of the apparatus for suppressing the electric corrosion of the bearing is electrically connected to the motor controller housing. The motor controller housing is grounded, that is, the grounding is achieved through the motor controller housing.

In another embodiment, as shown in FIG. 11, which is another schematic position diagram of the apparatus for suppressing the electric corrosion of the bearing in the electric driving system of this embodiment, the apparatus for suppressing the electric corrosion of the bearing is installed in the motor controller, and the capacitance module, the first resistance module and the reactance module in the second embodiment are used, that is, the capacitance $C_d$, the resistance $R_d$ and the magnetic bead $FB_d$ connected in series, and the PCB 60 is provided in the motor controller. As shown in FIG. 11, the input end of the apparatus for suppressing the electric corrosion of the bearing is connected to the rotating shaft 30 of the motor, and the output end of the apparatus for suppressing the electric corrosion of the bearing is electrically connected to the motor controller housing. The motor controller housing is grounded, that is, the grounding is achieved through the motor controller housing.

It can be understood that the apparatus for suppressing the electric corrosion of the bearing installed in the motor controller in this embodiment can be the apparatus for suppressing the electric corrosion of the bearing in any one of the first to fourth embodiments, which will not be repeated here.

In the electric driving system provided in this embodiment, the apparatus for suppressing the electric corrosion of the bearing is directly installed in the motor controller. In this installation method, since the motor controller is an essential device for controlling the motor in the electric driving system, the apparatus for suppressing the electric corrosion of the bearing is provided therein, which can be applied to more scenarios, meet actual needs, and increase the application scope of the electric driving system, especially the apparatus for suppressing the electric corrosion of the bearing therein.

Seventh embodiment

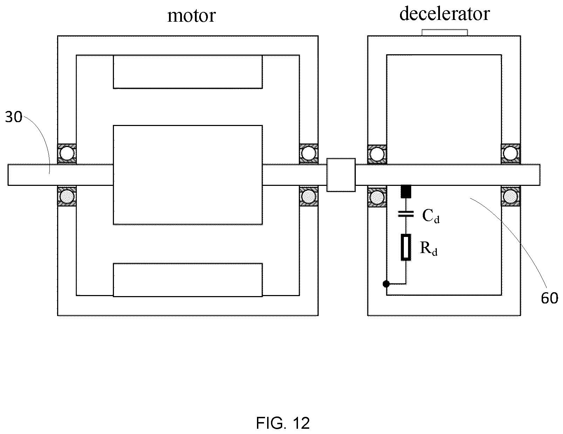

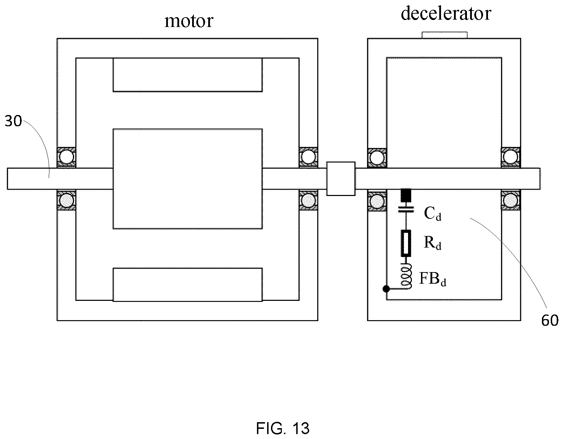

Based on the same inventive concept, with reference to FIG. 12 and FIG. 13, on the basis of the fifth embodiment, a seventh embodiment of the electric driving system of the present application is provided. The electric driving system includes a decelerator electrically connected to the motor, and the apparatus for suppressing the electric corrosion of the bearing is installed in the decelerator. The decelerator includes a decelerator shaft connected to the rotating shaft 30 of the motor.

Further, in the electric driving system, the input end of the apparatus for suppressing the electric corrosion of the bearing can be electrically connected to the decelerator shaft in the electric driving system through a conductive bypass member 70, and the decelerator shaft is connected to the rotating shaft 30. The conductive bypass member 70 can be any one of a conductive fiber, a conductive carbon rod, a conductive elastic sheet, and a conductive brush, etc.

Since the decelerator shaft is connected to the rotating shaft 30 through the connection member, the decelerator shaft, the rotating shaft 30 of the motor, and the connection member are conductive materials, the apparatus for suppressing the electric corrosion of the bearing is indirectly electrically connected to the rotating shaft 30 after being electrically connected to the decelerator shaft.

Further, the output end of the apparatus for suppressing the electric corrosion of the bearing is electrically connected to the motor housing in the electric driving system, and the motor housing is grounded; or,
the output end of the apparatus for suppressing the electric corrosion of the bearing is electrically connected to the decelerator housing of the decelerator in the electric driving system, and the decelerator housing is grounded.

In an embodiment, as shown in FIG. 12, which is a schematic position diagram of the apparatus for suppressing the electric corrosion of the bearing in the electric driving system of this embodiment, the apparatus for suppressing the electric corrosion of the bearing is provided at the decelerator side of the electric driving system, and the capacitance module and the first resistance module in the first embodiment are used, that is, the capacitance $C_d$ and the resistance $R_d$ connected in series. The PCB 60 is provided in the motor controller. As shown in FIG. 12, the input end of the apparatus for suppressing the electric corrosion of the bearing is electrically connected to the decelerator shaft, and the decelerator shaft is connected to the rotating shaft 30 of the motor. The output end of the apparatus for suppressing the electric corrosion of the bearing is electrically connected to the decelerator housing, and the decelerator housing is grounded, that is, the grounding is achieved through the decelerator housing.

In another embodiment, as shown in FIG. 13, which is another schematic position diagram of the apparatus for suppressing the electric corrosion of the bearing in the electric driving system of this embodiment, the apparatus for suppressing the electric corrosion of the bearing is provided at the decelerator side of the electric driving system, and the capacitance module, the first resistance module and the reactance module in the second embodiment are used, that is, the capacitance $C_d$, the resistance $R_4$ and the magnetic bead $FB_d$ connected in series. The PCB 60 is provided in the motor controller. As shown in FIG. 13, the input end of the apparatus for suppressing the electric corrosion of the bearing is electrically connected to the decelerator shaft, and the decelerator shaft is connected to the rotating shaft 30 of the motor. The output end of the apparatus for suppressing the electric corrosion of the bearing is electrically connected to the decelerator housing, and the decelerator housing is grounded, that is, the grounding is achieved through the decelerator housing.

It can be understood that the apparatus for suppressing the electric corrosion of the bearing provided at the decelerator side in this embodiment can be the apparatus for suppressing the electric corrosion of the bearing in any one of the first to fourth embodiments, which will not be described here.

In the electric driving system provided in this embodiment, the apparatus for suppressing the electric corrosion of the bearing is provided at the decelerator side of the electric driving system. This installation method can further reduce the electric corrosion of the high frequency loop current to the bearing provided on the decelerator side.

Eighth embodiment

Based on the same inventive concept, an embodiment of an electric vehicle of the present application is provided. The electric vehicle may include:

a battery and an electric driving system.

The battery is configured to provide electric energy to the electric driving system, and the specific structure of the electric driving system can refer to any one of the first to seventh embodiments.

Specifically, the electric vehicle can be an electric drive vehicle such as an electric car, an electric bicycle, and an electric tricycle. The battery can be regarded as a power supply system. For example, it can include a power supply apparatus and a power supply management circuit. The voltage output by the power supply apparatus is converted and filtered by the power supply management circuit, and is provided to the electric driving system. Specifically, the voltage can be provided to the motor of the electric driving system, so that the motor runs and realizes the electric drive function. It can be understood that the functions realized by the apparatus in the power supply system and the power supply management circuit can be provided according to actual needs, which are not limited this embodiment.

In the above process, in order to avoid the EDM discharge, the apparatus for suppressing the electric corrosion of the bearing is provided in parallel at the bearing of the motor, and the rotating shaft of the motor is grounded through the apparatus for suppressing the electric corrosion of the bearing. The high frequency loop current generated at the bearing is suppressed by the apparatus for suppressing the electric corrosion of the bearing, so as to suppress the electric corrosion to the bearing and extend the service life of the bearing.

It should be noted that since the electric vehicle of this embodiment adopts all the technical solutions of all the above-mentioned embodiments, it has at least all the beneficial effects brought by the technical solutions of the above-mentioned embodiments, which will not be repeated here.

It should be noted that the serial number of embodiments in the present application is for description only and does not represent the merits of embodiments. The above embodiments are only optional embodiments of the present application, and do not therefore limit the scope of the present application. Any equivalent structure or equivalent process transformation made by using the contents of the present application specification and drawings under the invention concept of the present application, or directly or indirectly used in other relevant technical fields, are included in the scope of the present application.

**Claims**

1. An electric driving system, **characterized by** comprising:

   a motor comprising a motor housing, a bearing and a rotating shaft provided in the motor housing; and
   an apparatus for suppressing electric corrosion of the bearing comprising a capacitance module and a first resistance module connected in series;

wherein an input end of the apparatus for suppressing the electric corrosion of the bearing is electrically connected to the rotating shaft, and an output end of the apparatus for suppressing the electric corrosion of the bearing is grounded.

2. The electric driving system according to claim 1, wherein the apparatus for suppressing the electric corrosion of the bearing further comprises:
a reactance module, wherein an input end of the reactance module is connected to the first resistance module, and an output end of the reactance module is grounded.

3. The electric driving system according to claim 2, wherein the apparatus for suppressing the electric corrosion of the bearing further comprises a second resistance module, wherein

the second resistance module is connected in parallel with the capacitance module and the first resistance module connected in series; or
the second resistance module is connected in parallel with the capacitance module, the first resistance module and the reactance module connected in series.

4. The electric driving system according to claim 3, wherein the capacitance module comprises a plurality of capacitances electrically connected, and the first resistance module comprises a plurality of resistances electrically connected; the reactance module comprises a plurality of magnetic beads electrically connected and/or a plurality of inductances electrically connected, and the second resistance module comprises a plurality of resistances electrically connected.

5. The electric driving system according to claim 1 or 2, further comprising:

a motor controller electrically connected to the motor; and
a decelerator;
wherein the apparatus for suppressing the electric corrosion of the bearing is provided at the motor, the motor controller or the decelerator.

6. The electric driving system according to claim 1 or 2, further comprising:

an insulation member provided between the bearing and an end cover of the motor;
wherein the bearing is provided in the motor housing and sleeved at an outer side of the rotating shaft.

7. The electric driving system according to claim 1 or 2, wherein the input end of the apparatus for suppressing the electric corrosion of the bearing is electrically connected to the rotating shaft through a conductive bypass member.

8. The electric driving system according to claim 1 or 2, further comprising:

a decelerator electrically connected to the motor;
wherein the decelerator comprises a decelerator shaft connected to the rotating shaft, and the input end of the apparatus for suppressing the electric corrosion of the bearing is electrically connected to the decelerator shaft through a conductive bypass member.

9. The electric driving system according to claim 1 or 2, further comprising:

a motor controller electrically connected to the motor, wherein
the output end of the apparatus for suppressing the electric corrosion of the bearing is electrically connected to the motor housing, and the motor housing is grounded; or
the output end of the apparatus for suppressing the electric corrosion of the bearing is electrically connected to a motor controller housing, and the motor controller housing is grounded.

10. An electric vehicle, **characterized by** comprising:

a battery; and
the electric driving system according to any one of claims 1 to 9;
wherein the battery is configured to supply electrical energy to the electric driving system.

FIG. 1

FIG. 2

FIG. 3

FIG. 4

FIG. 5

FIG. 6

FIG. 7

FIG. 8

FIG. 9

motor

60   motor
controller

30

$C_d$   $R_d$

FIG. 10

FIG. 11

motor            decelerator

30

$C_d$

$R_d$

60

FIG. 12

motor

decelerator

30

$C_d$

$R_d$

$FB_d$

60

FIG. 13

## INTERNATIONAL SEARCH REPORT

| | International application No. |
|---|---|
| | **PCT/CN2023/099748** |

**A.    CLASSIFICATION OF SUBJECT MATTER**

H02K 11/40(2016.01)i;  H02K 7/08(2006.01)i;  H02K 7/10(2006.01)i;  H02K 5/16(2006.01)i;  H02K 5/08(2006.01)i

According to International Patent Classification (IPC) or to both national classification and IPC

**B.    FIELDS SEARCHED**

Minimum documentation searched (classification system followed by classification symbols)

IPC: H02K

Documentation searched other than minimum documentation to the extent that such documents are included in the fields searched

Electronic data base consulted during the international search (name of data base and, where practicable, search terms used)

CNTXT, ENTXT, ENTXTC, DWPI, WPABS, CKNI: 轴承, 电腐蚀, 电蚀, 转轴, 电容, 电流, 接地, bearing, corrosion, shaft, capacitor, current, ground

**C.    DOCUMENTS CONSIDERED TO BE RELEVANT**

| Category* | Citation of document, with indication, where appropriate, of the relevant passages | Relevant to claim No. |
|---|---|---|
| PX | CN 115085485 A (SUZHOU HUICHUAN UNITED POWER SYSTEM CO., LTD.) 20 September 2022 (2022-09-20)<br>description, paragraphs 5-90, and figures 1-9 | 1, 5-9 |
| X | CN 1695065 A (ALSTOM TECHNOLOGY LTD.) 09 November 2005 (2005-11-09)<br>description, page 1, line 4-page 7, line 20, and figure 1 | 1, 5, 7, 8, 10 |
| Y | CN 1695065 A (ALSTOM TECHNOLOGY LTD.) 09 November 2005 (2005-11-09)<br>description, page 1, line 4-page 7, line 20, and figure 1 | 2-10 |
| Y | CN 104638890 A (STATE GRID CORPORATION OF CHINA et al.) 20 May 2015 (2015-05-20)<br>description, paragraphs 2-57, and figure 1 | 2-10 |
| Y | JP H1014159 A (MATSUSHITA SEIKO K. K.) 16 January 1998 (1998-01-16)<br>description, paragraph 5, and figure 5 | 6, 10 |
| Y | US 7501784 B2 (SIEMENS AKTIENGESELLSCHAFT) 10 March 2009 (2009-03-10)<br>description, column 3, line 20-column 5, paragraph 50, and figures 8-11 | 9-10 |

☑ Further documents are listed in the continuation of Box C.        ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **08 August 2023** | **10 August 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2023/099748**

### C. DOCUMENTS CONSIDERED TO BE RELEVANT

| Category* | Citation of document, with indication, where appropriate, of the relevant passages | Relevant to claim No. |
|---|---|---|
| Y | CN 1531158 A (SKF AB) 22 September 2004 (2004-09-22)<br>description, page 1, 2nd-to-last line-page 5, line 10, and figure 1 | 9-10 |

Form PCT/ISA/210 (second sheet) (July 2022)

<p style="text-align:center"><strong>INTERNATIONAL SEARCH REPORT</strong><br>Information on patent family members</p>

International application No.

**PCT/CN2023/099748**

| Patent document cited in search report | | | Publication date (day/month/year) | Patent family member(s) | | | Publication date (day/month/year) |
|---|---|---|---|---|---|---|---|
| CN | 115085485 | A | 20 September 2022 | CN | 218124507 | U | 23 December 2022 |
| CN | 1695065 | A | 09 November 2005 | CA | 2498105 | A1 | 25 March 2004 |
| | | | | CA | 2498105 | C | 17 March 2015 |
| | | | | AU | 2003297598 | A1 | 30 April 2004 |
| | | | | JP | 2005538674 | A | 15 December 2005 |
| | | | | WO | 2004025811 | A2 | 25 March 2004 |
| | | | | WO | 2004025811 | A3 | 04 November 2004 |
| | | | | EP | 1537428 | A2 | 08 June 2005 |
| | | | | EP | 1537428 | B1 | 06 May 2009 |
| | | | | DE | 50311500 | D1 | 18 June 2009 |
| | | | | US | 2005184751 | A1 | 25 August 2005 |
| | | | | US | 7649470 | B2 | 19 January 2010 |
| | | | | CN | 1695065 | B | 05 May 2010 |
| | | | | AU | 2003297598 | A8 | 03 November 2005 |
| CN | 104638890 | A | 20 May 2015 | | None | | |
| JP | H1014159 | A | 16 January 1998 | | None | | |
| US | 7501784 | B2 | 10 March 2009 | WO | 2005099071 | A1 | 20 October 2005 |
| | | | | JP | 2007532088 | A | 08 November 2007 |
| | | | | DE | 102004016738 | B3 | 10 November 2005 |
| | | | | US | 2007182357 | A1 | 09 August 2007 |
| CN | 1531158 | A | 22 September 2004 | HU | 0400111 | A2 | 28 January 2005 |
| | | | | CZ | 2004187 | A3 | 13 July 2005 |
| | | | | DE | 502004007705 | D1 | 11 September 2008 |
| | | | | ES | 2311762 | T3 | 16 February 2009 |
| | | | | US | 2004189115 | A1 | 30 September 2004 |
| | | | | US | 7446989 | B2 | 04 November 2008 |
| | | | | CA | 2455198 | A1 | 07 August 2004 |
| | | | | CA | 2455198 | C | 31 July 2012 |
| | | | | EP | 1445850 | A1 | 11 August 2004 |
| | | | | EP | 1445850 | B1 | 30 July 2008 |
| | | | | JP | 2004242496 | A | 26 August 2004 |
| | | | | JP | 3914922 | B2 | 16 May 2007 |
| | | | | CN | 100487999 | C | 13 May 2009 |
| | | | | DE | 20301956 | U1 | 22 July 2004 |

Form PCT/ISA/210 (patent family annex) (July 2022)

**EP 4 546 622 A1**

**Patent documents cited in the description**

- CN 202210763512

- CN 202310483862